# EUROPEAN PATENT APPLICATION

(11) **EP 4 618 268 A1**
(43) Date of publication of application: **17.09.2025**
(21) Application number: 25162150.4
(22) Date of filing: 06.03.2025
(51) Int. Cl.: H01M 50/184, H01M 50/186, H01M 50/188

(54) **ELECTRIC STORAGE DEVICE AND MANUFACTURING METHOD OF ELECTRIC STORAGE DEVICE**

(30) Priority: 15.03.2024 JP 2024041193
(71) Applicant: Prime Planet Energy & Solutions, Inc., Chuo-ku, Tokyo 103-0022 (JP)
(72) Inventor: TOMITA, Yuji, Tokyo 103-0022 (JP)
(74) Representative: Kuhnen & Wacker Patent- und Rechtsanwaltsbüro PartG mbB

(57) **Abstract**

A case 10 of the herein disclosed electric storage device 100 includes an electrode terminal 20, and a sealing material 30. The electrode terminal 20 includes a shaft part 22 and a plate part 24. Then, the sealing material 30 includes a side surface protecting part 36 configured to cover the side surface 24c of the plate part 24, and a locking part 39 configured to continue to a top end of the side surface protecting part 36 and configured to cover a peripheral edge part 24a1 of the connection surface 24a. According to the electric storage device 100 including the above described configuration, it is possible by the locking part 39 of the sealing material 30 to regulate a rise of the electrode terminal 20, and thus it is possible to inhibit a breakage of the sealing material 30 and a detachment of the electrode terminal 20.

## Description

### BACKGROUND

### 1. Technical Field

The present disclosure relates to an electric storage device and a manufacturing method of the electric storage device.

### 2. Description of the Related Art

An electric storage device, such as secondary battery, is used for a power supply of several electric products. This electric storage device includes an electrode body and a case in which the electrode body is accommodated. This case includes, for example, a case main body that is a box-shaped body having an opening part, and includes an opening-portion covering plate that is configured to cover the opening part of this case main body. In addition, to the case, an electrode terminal being connected to an outside electrically conductive part (a bus bar, or the like), a sealing material configured to establish an insulation between this electrode terminal and the case, or the like, are attached.

An example of this electric storage device is disclosed in Japanese application publication 2016-058215. On a cover main body (an opening-portion covering plate) described in this cited document, a through hole is formed. Then, a terminal part (an electrode terminal) is arranged to penetrate the through hole of the cover main body. Then, a resin member (a sealing material) is configured to seal a gap between the terminal part and the cover main body, and to fix the terminal part with respect to the cover main body. In addition, the terminal part includes an outer side arrangement part that is arranged at an outer side of the cover main body. Then, the resin member described in the above described patent document is configured to cover a periphery of the outer side arrangement part.

### SUMMARY

Anyway, a portable power supply, such as electric storage device, is often mounted on a moving body, such as portable terminal and vehicle. A vibration, occurring at a time when this moving body moves, sometimes causes a stress applied onto an electrode terminal of the electric storage device. At that time, if a large stress is applied in a direction of lifting up the electrode terminal, there is a fear that a breakage of the sealing material and a detachment of the electrode terminal are caused.

For a circumstance described above, a manufacturing method of an electric storage device including a below described configuration (hereinafter, which might be simply referred to as "manufacturing method", too) is provided.

A herein disclosed electric storage device includes an electrode body, and a case configured to accommodate the electrode body. This case includes a case part including a penetration hole, an electrode terminal inserted into the penetration hole, and a sealing material configured to seal the penetration hole and being a resin member integrated with the case part and the electrode terminal. In addition, the electrode terminal includes a shaft part inserted into the penetration hole, and a plate part arranged along the case part. In addition, the plate part of the electrode terminal includes a connection surface configured to be exposed to an outside of the case, a back surface positioned at a side opposite to the connection surface, and a side surface configured to continue to the connection surface and the back surface. Then, the sealing material includes a base part configured to cover the back surface of the plate part, a side surface protecting part configured to continue to the base part and configured to cover the side surface of the plate part, and a locking part configured to continue to a top end of the side surface protecting part and configured to cover at least a part of an upper surface of a peripheral edge part of the connection surface.

The sealing material of the herein disclosed electric storage device includes a base part that is integrated with the case part. The sealing material includes a locking part that is molded to be continuously with the base part through the side surface protecting part. Then, this locking part is configured to cover the connection surface of the plate part of the electrode terminal. In other words, the sealing material of the herein disclosed electric storage device is integrated with the case part and is configured to cover the connection surface (an upper surface) of the electrode terminal. By doing this, it is possible to regulate the rise of the electrode terminal, and thus it is possible to inhibit a breakage of the sealing material and a detachment of the electrode terminal.

In addition, the locking part of the herein disclosed electric storage device is configured to cover at least a part of a peripheral edge part of the connection surface of the plate part of the electrode terminal. By doing this, a central part of the connection surface of the electrode terminal is exposed to an outside, and thus it is possible to properly connect the electrode terminal with an outside electrically conductive part (a bus bar, or the like).

### BRIEF DESCRIPTION OF THE DRAWINGS

FIG. 1 is a perspective view that schematically shows an electric storage device in accordance with the first embodiment.
FIG. 2 is an enlarged cross section view that schematically shows a structure at an electrode terminal vicinity of the electric storage device in accordance with the first embodiment.
FIG. 3 is an enlarged plane view that schematically shows the structure at the electrode terminal vicinity of the electric storage device shown by FIG. 1.
FIG. 4 is a perspective view that schematically shows an opening-portion covering plate of the electric storage device in accordance with the first embodiment.
FIG. 5 is a perspective view that schematically shows the electrode terminal of the electric storage device in accordance with the first embodiment.
FIG. 6 is a flowchart that is for explaining a manufacturing method in accordance with a first embodiment.
FIG. 7 is a perspective view that schematically shows an inserting step of the manufacturing method in accordance with the first embodiment.
FIG. 8 is a cross section view that schematically shows an accommodating step of the manufacturing method in accordance with the first embodiment.
FIG. 9 is a cross section view that schematically shows an injecting step of the manufacturing method in accordance with the first embodiment.
FIG. 10 is an enlarged cross section view that schematically shows the injecting step of the manufacturing method in accordance with the first embodiment.
FIG. 11 is an enlarged plane view that schematically shows a structure at an electrode terminal vicinity of an electric storage device in accordance with another embodiment.
FIG. 12 is an enlarged plane view that schematically shows the structure at the electrode terminal vicinity of the electric storage device in accordance with another embodiment.

### DETAILED DESCRIPTION

Below, an embodiment of a herein disclosed technique will be explained, while referring to drawings. Incidentally, the matters other than matters particularly mentioned in this specification, and required for practicing the present disclosure (for example, an electrode body, a detailed material of an electrolytic solution, or the like) can be grasped as design matters of those skilled in the art based on the related art in the present field. The herein disclosed technique can be executed based on the contents disclosed in the present specification, and on the technical commonsense in the present field. Additionally, in the present specification, a wording "A to B" representing a range semantically covers not only a meaning equal to or more than A and not more than B, but also meanings "more than A" and "less than B".

Incidentally, a term "electric storage device" in the present specification represents a concept semantically covering an apparatus in which, by moving a charge carrier between a pair of electrodes (a positive electrode and a negative electrode), a charge and discharge response is generated. In other words, the electric storage device in accordance with the herein disclosed technique semantically covers not only a secondary battery, such as lithium ion secondary battery, nickel hydrogen battery, and nickel cadmium battery, but also a capacitor, such as lithium ion capacitor, and electric double layer capacitor, or the like.

### <First embodiment>

### A. Electric storage device

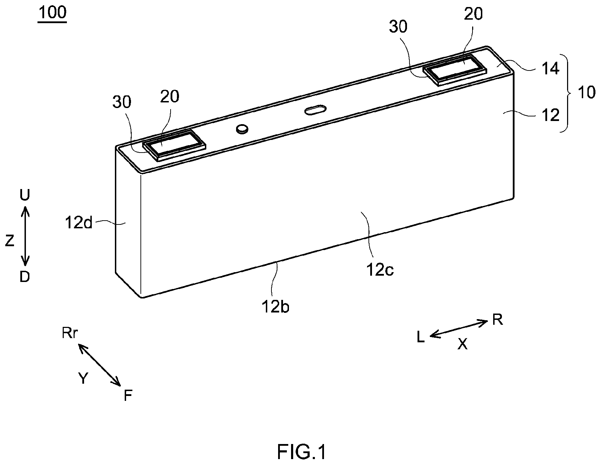

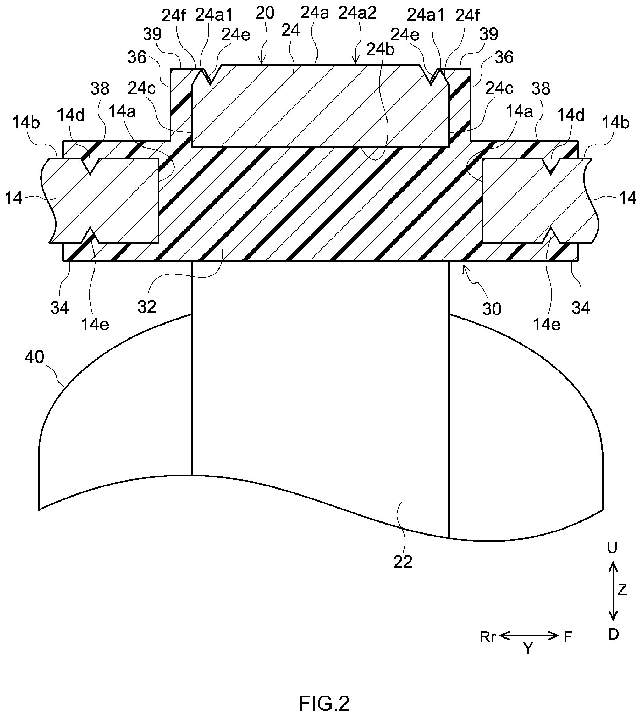

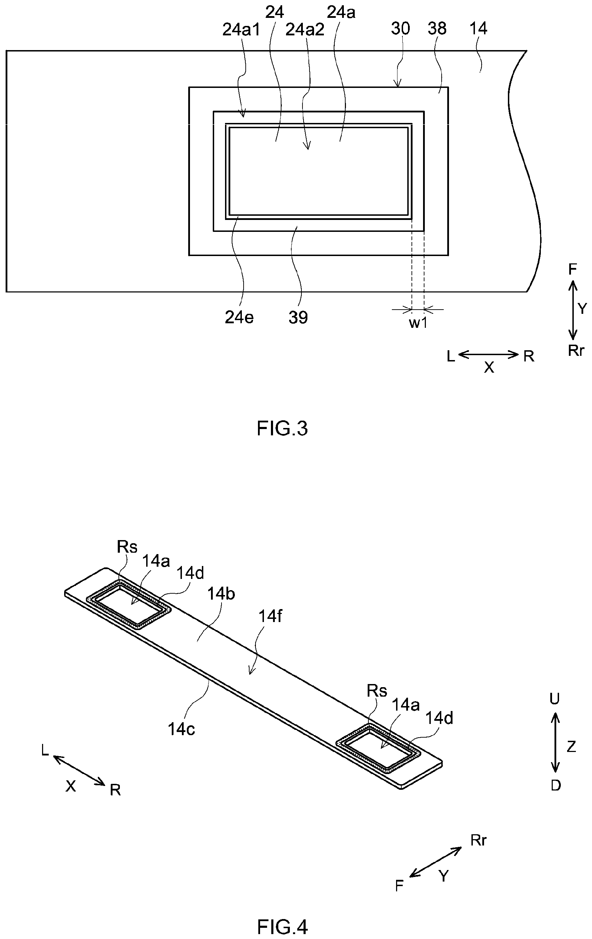

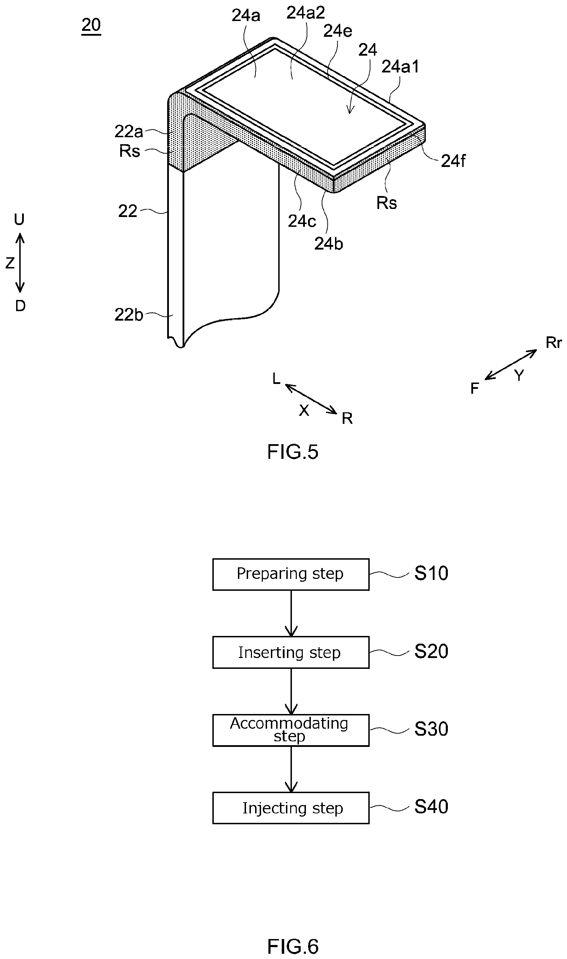

Below, while referring to drawings, an embodiment of a manufacturing method of a herein disclosed electric storage device will be described. FIG. 1 is a perspective view that schematically shows the electric storage device in accordance with the first embodiment. FIG. 2 is an enlarged cross section view that schematically shows a structure at an electrode terminal vicinity of the electric storage device shown by FIG. 1. FIG. 3 is an enlarged plane view that schematically shows the structure at the electrode terminal vicinity of the electric storage device shown by FIG. 1. FIG. 4 is a perspective view that schematically shows an opening-portion covering plate of the electric storage device in accordance with the first embodiment. FIG. 5 is a perspective view that schematically shows the electrode terminal of the electric storage device in accordance with the first embodiment.

Incidentally, reference signs L, R, F, Rr, U, and D of drawings referred in the present specification are to respectively represent left, right, front, rear, up, and down. In addition, reference signs X, Y, and Z of drawings are to respectively represent a width direction, a depth direction, and a height direction of the electric storage device. However, these are merely directions defined for an explanation sake, and are not intended to restrict an disposed aspect of each member in the herein disclosed technique.

As shown by FIG. 1 and FIG. 2, an electric storage device 100 in accordance with the present embodiment includes an electrode body 40 and a case 10 configured to accommodate the electrode body 40.

### 1. Electrode body

The electrode body 40 is a power generating element of the electric storage device 100. As the electrode body 40, it is possible without particular restriction to use one capable of being used for a conventionally known electric storage device, and thus a detailed explanation is omitted. In addition, as the illustration is omitted, an electrolytic solution is also accommodated inside the case 10. A composition of this electrolytic solution is not particularly restricted, and thus a detailed explanation of it also omitted.

### 2. Case

The case 10 is a container configured to accommodate the electrode body 40. The case 10 in the present embodiment includes the case main body 12 and the opening-portion covering plate 14. The case main body 12 is a box-shaped body that has an upper surface opening. In particular, the case main body 12 includes a bottom part 12b being a long rectangular plate-shaped member, a pair of first side walls 12c configured to extend to an upward U from long sides (sides along the width direction X) of the bottom part 12b, and a pair of second side walls 12d configured to extend to the upward U from short sides (sides along the depth direction Y) of the bottom part 12b. Then, on an upper surface of the case main body 12, the upper surface opening is formed which is surrounded by respective top ends of the first side walls 12c and the second side walls 12d. On the other hand, the opening-portion covering plate 14 is a rectangular plate-shaped member configured to cover the upper surface opening of the case main body 12. In particular, the opening-portion covering plate 14 is a long plate-shaped member that is configured to extend in the width direction X. The opening-portion covering plate 14 is fit into a top end part of the case main body 12. Then, a boundary between the case main body 12 and the opening-portion covering plate 14 is joined by laser welding, or the like. Incidentally, it is preferable that the case 10 (the case main body 12 and the opening-portion covering plate 14) is a member that is made of metal and that has a strength being equal to or more than a predetermined level. As an example of a material of the case 10, it is possible to use a metal material, such as aluminum and aluminum alloy.

Furthermore, the case 10 in the present embodiment includes a case member, the electrode terminal 20, and the sealing material 30. Below, each of the configurations will be described.

### (1) Case part

The wording "case part" in the present specification means, among plural parts configuring the case of the electric storage device, a part to which an electrode terminal and a sealing material are attached. For example, in this electric storage device 100 shown by FIG. 1, the electrode terminal 20 and the sealing material 30 are attached to the opening-portion covering plate 14. In the configuration described above, the opening-portion covering plate 14 becomes the case part. However, the case part is not restricted to the opening-portion covering plate. For example, in a situation where the electrode terminal and the sealing material are attached to the case main body, the case main body is treated as the case part.

As shown in FIG. 4, the case part (the opening-portion covering plate 14) of the electric storage device 100 includes a penetration hole 14a. This penetration hole 14a is formed at each of both end parts of the opening-portion covering plate 14 in the width direction X. The penetration hole 14a in FIG. 4 is an opening part that is formed to be rectangular in a plane view. However, a flat surface shape of the penetration hole 14a is not particularly restricted, if the later described electrode terminal 20 can be inserted into it. As another example of the flat surface shape of the penetration hole 14a, it is possible to be a circular shape, an oval shape, or the like. In addition, on an outer side surface 14b of the opening-portion covering plate 14, an outside groove 14d surrounding the penetration hole 14a is formed. Similarly, on an inner side surface 14c of the opening-portion covering plate 14, an inside groove 14e surrounding the penetration hole 14a is formed, too (see FIG. 2). As shown in FIG. 2, a part of the sealing material 30 is configured to flow into the outside groove 14d and the inside groove 14e. By doing this, it is possible to enhance an adhesive property of the opening-portion covering plate 14 with the sealing material 30.

### (2) Electrode terminal

The electrode terminal 20 is a conductive member that is inserted into the penetration hole 14a. As shown in FIG. 5, the electrode terminal 20 in the present embodiment is a long member that is configured to extend in the height direction Z. This electrode terminal 20 includes a shaft part 22 and a plate part 24.

The shaft part 22 is a portion that is inserted into the penetration hole 14a. As shown in FIG. 2 and FIG. 5, the shaft part 22 of the present embodiment is a long plate-shaped member that is configured to extend in the height direction Z. Then, the shaft part 22 is accommodated at an inside of the case 10. Then, a lower end part of the shaft part 22 is connected to the electrode body 40 (omitted in drawings). Incidentally, the shape of the shaft part 22 is not restricted to the plate shape, and thus it might be a column shape (a cylindrical column shape, or a prismatic column shape), or the like.

The plate part 24 is a portion that is arranged along the case part (the opening-portion covering plate 14). As shown in FIG. 5, the plate part 24 of the present embodiment is configured to extend in the width direction X continuously from a top end 22a of the shaft part 22. The plate part 24 described above is formed by folding and bending a tip end of a long plate-shaped conductive member. Incidentally, the plate part 24 is molded to be in a flat surface approximately rectangular shape so as to correspond to the approximately rectangular penetration hole 14a. As described above, it is preferable that the flat surface shape of the plate part is a shape corresponding to the flat surface shape of the penetration hole. By doing this, it becomes easy to perform resin filling at a later described injecting step S40. However, the flat surface shape of the plate part is not restricted to the approximately rectangular shape. For example, in a situation where the flat surface shape of the penetration hole is a circular shape, it is good to make the flat surface shape of the plate part be the circular shape, too. In addition, it is good even if the electrode terminal is not an integral part in which the shaft part and the plate part are continued. For example, it is good that the shaft part and the plate part are individually manufactured and then these are combined so as to construct the electrode terminal.

In addition, the plate part 24 includes a connection surface 24a, a back surface 24b, and a side surface 24c. As shown in FIG. 2, the connection surface 24a of the plate part 24 is exposed to an outside of the case 10. By doing this, an outside electrically conductive part, such as bus bar, can be connected to the plate part 24 of the electrode terminal 20. In addition, the back surface 24b of the plate part 24 is a surface positioned at a side opposite to the connection surface 24a. This back surface 24b is covered by a later described base part 32 of the sealing material 30. In addition, the side surface 24c is a surface that is configured to continue to the connection surface 24a and the back surface 24b. This side surface 24c is covered by a side surface protecting part 36 of the sealing material 30. Incidentally, it is preferable that an insertion height of the electrode terminal 20 is adjusted to arrange the back surface 24b of the plate part 24 at the upward U more than the outer side surface 14b of the opening-portion covering plate 14. By doing this, a base part 32 of the sealing material 30 and an outside insulating part 38 are properly formed, and thus it is possible to further stably fix each member.

### (3) Sealing material

The sealing material 30 is a resin member that is configured to seal the penetration hole 14a of the case part (the opening-portion covering plate 14). This sealing material 30 is integrated with the opening-portion covering plate 14 and the electrode terminal 20. Incidentally, the wording "integrated" in the present specification means that the metal member (the opening-portion covering plate, the electrode terminal, or the like) and the resin member (the sealing material, or the like) are adhesively fixed. The sealing material 30 in the present embodiment includes the base part 32, the side surface protecting part 36, and a locking part 39. In addition, the sealing material 30 shown by FIG. 2 further includes an inside insulating part 34 and the outside insulating part 38. Below, each of the configurations will be described.

### (a) Base part

The base part 32 is a resin member that is configured to cover the back surface 24b of the plate part 24 and the case part (the opening-portion covering plate 14). In particular, the base part 32 is a resin member where filling is performed into the penetration hole 14a of the opening-portion covering plate 14. This base part 32 is integrated with the back surface 24b of the plate part 24, the outer side surface of the penetration hole 14a, and the top end part 22a of the shaft part 22 (see FIG. 5). By doing this, the base part 32 is fixed to the electrode terminal 20 and the opening-portion covering plate 14.

### (b) Inside insulating part

Next, the inside insulating part 34 is a resin member that is configured to extend along the inner side surface 14c of the opening-portion covering plate 14. This inside insulating part 34 is configured to extend continuously from the base part 32 to an outer side in a diameter direction (for example, the depth direction Y in FIG. 2). This inside insulating part 34 has a function for inhibiting the opening-portion covering plate 14 from coming into contact with the electrode body 40 when the electrode body 40 inside the case 10 moves upwardly and downwardly by a vibration, or the like. Furthermore, a part of the inside insulating part 34 is configured to flow into the inside groove 14e of the opening-portion covering plate 14. By doing this, it is possible to suppress the sealing material 30 from moving in a flat surface direction (the width direction X and the depth direction Y).

### (c) Outside insulating part

In addition, the outside insulating part 38 is a resin member that is configured to extend along the outer side surface 14b of the opening-portion covering plate 14. Similarly to the inside insulating part 34, the outside insulating part 38 is also configured to extend continuously from the base part 32 to the outer side in the diameter direction (for example, the depth direction Y in FIG. 2). This outside insulating part 38 has a function of suppressing conduction between the plate part 24 of the electrode terminal 20 and the case 10 (the opening-portion covering plate 14). In particular, if the outer side surface 14b of the opening-portion covering plate 14 is exposed at a periphery of the plate part 24, there is a fear that the electrode terminal 20 conducts with the case 10 when an electrically conductive foreign substance (a metal powder, a liquid, or the like) has adhered to the plate part 24. Thus, it is preferable to form the outside insulating part 38 at the periphery of the plate part 24. In addition, a part of the outside insulating part 38 is configured to flow into the outside groove 14d of the opening-portion covering plate 14. By doing this, it is possible to further suitably suppress movement of the sealing material 30 in the flat surface direction (the width direction X and the depth direction Y). Furthermore, regarding the electric storage device 100 in accordance with the present embodiment, the case member (opening-portion covering plate 14) is sandwiched between the inside insulating part 34 and the outside insulating part 38. By doing this, it is possible to further suitably inhibit the sealing material 30 from moving upwardly and downwardly with respect to the opening-portion covering plate 14.

### (d) Side surface protecting part

The side surface protecting part 36 is a resin member that is configured to continue to the base part 32 and that is configured to cover the side surface 24c of the plate part 24. In particular, the side surface protecting part 36 is configured to extend from the base part 32 to the upward U so as to be along the side surface 24c of the plate part 24. Then, the side surface protecting part 36 is integrated with the side surface 24c of the plate part 24. This side surface protecting part 36 has a function, similarly to the outside insulating part 38 described above, for suppressing conduction between the electrode terminal 20 and the opening-portion covering plate 14 through the electrically conductive foreign substance. In addition, the side surface protecting part 36 can regulate the movement of the electrode terminal 20 in the flat surface direction (the width direction X and the depth direction Y), too. By doing this, it is possible to contribute in suppressing the breakage on the sealing material 30 caused by the vibration of the electrode terminal 20.

### (e) Locking part

The locking part 39 is a resin member that is configured to continue to a top end of the side surface protecting part 36 and that is configured to cover at least a part of a peripheral edge part 24a1 of the connection surface 24a. Particularly, the side surface protecting part 36 in the present embodiment is erectly provided at the upward U more than the peripheral edge part 24a1 of the connection surface 24a of the plate part 24. Then, the locking part 39 is configured to extend in a horizontal direction (the width direction X and/or the depth direction Y) so as to cover the peripheral edge part 24a1 of the connection surface 24a from the top end of the side surface protecting part 36. Then, this locking part 39 is integrated with the peripheral edge part 24a1 of the connection surface 24a. According to the locking part 39 including the above described configuration, it is possible to regulate a rise of the electrode terminal 20 so as to inhibit the breakage of the sealing material 30 and the detachment of the electrode terminal 20. Below, it will be particularly explained.

At first, as described above, the base part 32 of the sealing material 30 is integrated with the opening-portion covering plate 14. On the other hand, the locking part 39 is configured to cover the connection surface 24a of the plate part 24 of the electrode terminal 20. Then, the base part 32 and the locking part 39 are molded continuously through the side surface protecting part 36. In other words, the sealing material 30 of the present embodiment includes the locking part 39 that is adhesively fixed with the opening-portion covering plate 14 on the base part 32 and that is configured to cover the connection surface 24a (an upper surface) of the electrode terminal 20. By doing this, the electrode terminal 20 is fixed to the opening-portion covering plate 14 through the sealing material 30, and thus the rise of the electrode terminal 20 is regulated even if the electric storage device 100 is vibrated. As this result, it is possible to inhibit the breakage of the sealing material 30 and the detachment of the electrode terminal 20.

In addition, the locking part 39 of the present embodiment is configured to cover at least a part of the peripheral edge part of the connection surface 24a of the plate part 24 of the electrode terminal 20. By doing this, it is possible to inhibit the sealing material 30 being an insulating body from covering a central part 24a2 of the connection surface 24a and to make the central part 24a2 of the connection surface 24a be exposed to the outside. As this result, it is possible to sufficiently secure a connection area size of the electrode terminal 20 with the outside electrically conductive part (the bus bar, or the like).

Incidentally, as shown in FIG. 3, the locking part 39 of the present embodiment is configured to continuously cover the peripheral edge part 24a1 of the connection surface 24a of the plate part 24 over a whole circumference. In accordance with such a configuration, the whole circumference of the peripheral edge part 24a1 of the connection surface 24a is locked by the locking part 39, and thus it is possible to further surely regulate the rise of the electrode terminal 20. Incidentally, it is preferable that a width w1 of the locking part 39 in a plane view (see FIG. 3) is set in consideration of regulating the rise of the electrode terminal 20 and securing the area size of the central part 24a2 of the connection surface 24a. For example, the width w1 of the locking part 39 is set to be 2 mm to 5 mm (suitably, 3 mm to 4 mm).

In addition, as shown by FIG. 3, regarding the electrode terminal 20 of the present embodiment, a recessed part 24e depressed from the connection surface 24a is formed between the central part 24a2 of the connection surface 24a and the locking part 39. Although more details are described later, in accordance with such a configuration, it is possible to inhibit the resin from covering the central part 24a2 of the connection surface 24a when the sealing material 30 is molded. By doing this, it becomes unnecessary to perform a process for removing the resin having adhered to the central part 24a2 of the connection surface 24a, and thus a manufacture efficiency for the electric storage device 100 can be enhanced.

In addition, as shown by FIG. 2, regarding the electric storage device 100 in accordance with the present embodiment, a height position of the locking part 39 of the sealing material 30 is equal to or lower than a height position of the central part 24a2 of the connection surface 24a. In accordance with such a configuration, it is possible to further easily connect the electrode terminal 20 and the outside electrically conductive part. In particular, regarding connection of the electrode terminal 20 and the outside electrically conductive part, the central part 24a2 of the connection surface 24a of the electrode terminal 20 and the plate-shaped outside electrically conductive part might be made to have a surface contact. At that situation, if the locking part 39 is arranged at the upward U more than the central part 24a2 of the connection surface 24a, the locking part 39 causes an interference and thus it becomes difficult to have the surface contact of the electrode terminal 20 with the outside electrically conductive part. On the other hand, if the locking part 39 is arranged at a downward D more than the central part 24a2 of the connection surface 24a, it becomes easy to have the surface contact of the electrode terminal 20 with the outside electrically conductive part. Incidentally, in FIG. 2, the locking part 39 is arranged at the downward D more than the central part 24a2 of the connection surface 24a. However, a height position of the locking part 39 might be the same as a height position of the central part 24a2 of the connection surface 24a. Even in this situation, it is possible to easily have a surface contact of the electrode terminal 20 with the outside electrically conductive part.

Incidentally, in the present embodiment, a notch part 24f is formed at the peripheral edge part 24a1 of the connection surface 24a. By doing this, the peripheral edge part 24a1 of the connection surface 24a is arranged at the downward D more than the other area (the central part 24a2) of the connection surface 24a. Then, by forming the locking part 39 to cover this notch part 24f, it is possible to make the height position of the locking part 39 of the sealing material 30 be at a position equal to or lower than the height position of the central part 24a2 of the connection surface 24a.

### 2. Manufacturing method of electric storage device

Next, a method for manufacturing the electric storage device 100 having the above described configuration will be described. FIG. 6 is a flowchart that is for explaining a manufacturing method in accordance with the first embodiment. As shown in FIG. 6, the manufacturing method in accordance with the present embodiment includes a preparing step S10, an inserting step S20, an accommodating step S30, and an injecting step S40. Below, each of the steps is explained.

### (1) Preparing step S10

At the present step, a case part having the penetration hole 14a is prepared. As described above, the case part in the present embodiment is the opening-portion covering plate 14 (see FIG. 4). A detailed structure of this opening-portion covering plate 14 has been already explained, and thus overlapping explanations are omitted.

### (2) Inserting step S20

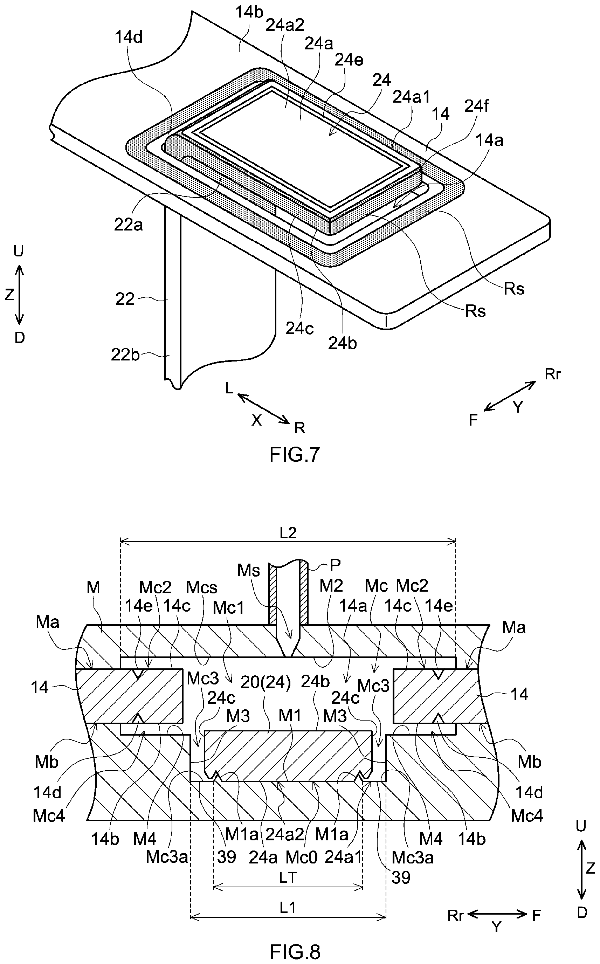

FIG. 7 is a perspective view that schematically shows the inserting step of the manufacturing method in accordance with the first embodiment. As shown in FIG. 7, at the inserting step S20, the electrode terminal 20 is inserted into the penetration hole 14a. In particular, the shaft part 22 of the electrode terminal 20 is inserted into the penetration hole 14a of the opening-portion covering plate 14. At that time, the insertion position of the electrode terminal 20 in the height direction Z is adjusted to make the plate part 24 of the electrode terminal 20 be arranged at the upward U more than the upper side surface 14b of the opening-portion covering plate 14. In addition, the insertion position of the electrode terminal 20 in the flat surface direction (the width direction X and the depth direction Y) is adjusted to make the approximately rectangular plate part 24 cover the upward U of the approximately rectangular penetration hole 14a.

In addition, as shown by FIG. 5 and FIG. 7, the electrode terminal 20 of the present embodiment includes the recessed part 24e. The recessed part 24e is a groove being depressed from the connection surface 24a, and is formed between the central part 24a2 of the connection surface 24a and the peripheral edge part 24a1. In addition, the recessed part 24e of the present embodiment is a ring-shaped recessed part that is formed to be along the peripheral edge part 24a1 of the connection surface 24a. According to the recessed part 24e having the above described configuration, at the later described injecting step S40, it is possible to suppress the resin R from invading to an area at an inner side of the recessed part 24e (the central part 24a2 of the connection surface 24a).

In addition, the electrode terminal 20 of the present embodiment includes the notch part 24f. The notch part 24f is formed by cutting the peripheral edge part 24a1 of the connection surface 24a. By doing this, the peripheral edge part 24a1 of the connection surface 24a is arranged at the downward D more than the central part 24a2. By forming the locking part 39 to cover this notch part 24f, it is possible to easily arrange the locking part 39 at the downward D more than the central part 24a2 of the connection surface 24a.

### (3) Accommodating step S30

FIG. 8 is a cross section view that schematically shows the accommodating step of the manufacturing method in accordance with the first embodiment. As shown in FIG. 8, at the accommodating step S30, the case part (the opening-portion covering plate 14) and the electrode terminal 20 are arranged at an inside cavity Mc of a metal mold M. In particular, at the inside cavity Mc of the metal mold M, a periphery of the penetration hole 14a of the opening-portion covering plate 14, a whole of the plate part 24, and the top end part 22a of the shaft part 22 are accommodated. On the other hand, as the illustration is omitted, neither of a lower end part 22b of the shaft part 22 (see FIG. 5) and a central part 14f of the opening-portion covering plate 14 in the width direction X (see FIG. 6) are accommodated at the inside cavity Mc, and they are exposed to the outside of the metal mold M. Additionally, at the accommodating step S30 in the present embodiment, the upper and lower positions of the electrode terminal 20 and the opening-portion covering plate 14 are reversed. By doing this, the back surface 24b of the plate part 24 and the inner side surface 14c of the opening-portion covering plate 14 are arranged at the upward U. In this situation, when temperatures of the electrode terminal 20 and the metal mold M are low at an initial of the later described injecting step S40, the resin R becomes to easily flow into a resin flow channel Mc3. As this result, it is possible to further suitably inhibit the resin R from invading into a resin blocking part Mc0.

Incidentally, the metal mold M used at the present step is configured with a metal material having a high strength, such as stainless steel type, die steel type, and maraging steel type. By doing this, it is possible to suppress deformation/breakage of the metal mold M during the injecting step S40. In addition, at the inside of the metal mold M, a cavity surface Mcs corresponding to a shape of the sealing material 30 being a mold object is formed. The wording "inside cavity Mc of the metal mold M" in the present specification means a space surrounded by the cavity surface Mcs of the metal mold M. Then, the cavity surface Mcs in the present embodiment includes a first surface M1 to a fourth surface M4 which are described below.

### (a) First surface M1

As shown in FIG. 8, the cavity surface Mcs of the metal mold M of the present embodiment has a surface contact with the connection surface 24a of the plate part 24. This cavity surface Mcs having the surface contact with the connection surface 24a is referred to as "first surface M1". By making this first surface M1 have the surface contact with the connection surface 24a, it is possible to inhibit the resin from adhering to the connection surface 24a. Additionally, in the present specification, an area where the connection surface 24a has the surface contact with the first surface M1 is referred to as "resin blocking part Mc0". However, in the present embodiment, the notch part 24f is formed at the peripheral edge part 24a1 of the connection surface 24a. Thus, a gap S is formed between the peripheral edge part 24a1 of the connection surface 24a and the first surface M1. This gap S is configured to communicate with the later described resin flow channel Mc3.

Additionally, in the present embodiment, a protruding part M1a configured to protrude from the first surface M1 to the upward U is provided. This protruding part M1a is formed at a position inserted into the recessed part 24e of the connection surface 24a of the electrode terminal 20. This protruding part M1a is a wedge-shaped protruding part whose cross section shape is triangle. At the accommodating step S30, an accommodating position of the electrode terminal 20 is adjusted to make an inclined plane of this wedge-shaped protruding part M1a have the surface contact with an inclined plane of the recessed part 24e.

Incidentally, as shown in FIG. 8, it is preferable that a dimension L1 of the first surface M1 in the depth direction Y is made to be longer than a dimension LT of the plate part 24 in the depth direction Y. By doing this, it becomes easy to make the first surface M1 have the surface contact with the connection surface 24a of the plate part 24. Particularly, in a situation where the dimension LT of the plate part 24 and the dimension L1 of the first surface M1 are approximately similar, there is a fear that the plate part 24 is disposed onto a third surface M3 of the metal mold M. In this situation, a gap is caused on the resin blocking part Mc0, and thus the possibility of having the resin adhering to the connection surface 24a is increased. On the other hand, it becomes easy to have the surface contact of the first surface M1 with the connection surface 24a when the first surface M1 is made to be wider than the plate part 24, and thus it is possible to further suitably inhibit the resin from adhering to the connection surface 24a. For example, a difference (L1-LT) between the dimension L1 of the first surface M1 and the dimension LT of the plate part 24 is preferably equal to or more than 0.001 mm, further preferably equal to or more than 0.005 mm, or preferably in particular equal to or more than 0.01 mm. On the other hand, if the difference (L1-LT) between the dimension L1 of the first surface M1 and the dimension LT of the plate part 24 becomes too large, it becomes easy to make the resin reach to a tip end Mc3a of the later described resin flow channel Mc3. From a perspective described above, the difference (L1-LT) between the dimension L1 of the first surface M1 and the dimension LT of the plate part 24 is preferably equal to or less than 0.2 mm, further preferably equal to or less than 0.15 mm, or preferably in particular equal to or less than 0.1 mm.

### (b) Second surface M2

A second surface M2 is a cavity surface Mcs opposed with a distance to the back surface 24b of the plate part 24. In this distance between the second surface M2 and the back surface 24b, a space is formed which is filled with the resin at the injecting step S40. In an explanation described below, this space is referred to as "first filled space Mc1". The resin having filled this first filled space Mc1 becomes the base part 32 of the sealing material 30 (see FIG. 2).

In addition, a dimension L2 of the second surface M2 in the depth direction Y is longer than the dimension LT of the plate part 24 in the depth direction Y. Then, both end parts of the second surface M2 in the depth direction Y are opposed over the plate part 24 to the inner side surface 14c of the opening-portion covering plate 14. Below, a space where the both end parts of the second surface M2 and the inner side surface 14c of the opening-portion covering plate 14 are opposed is referred to as "second filled space Mc2". The resin having filled this second filled space Mc2 becomes the inside insulating part 34 of the sealing material 30 (see FIG. 2). Incidentally, the second surface M2 of the metal mold M is configured to extend to an outer side (front F and rear Rr) more than the inside groove 14e of the opening-portion covering plate 14. As this result, the inside insulating part 34 is formed to cover the inside groove 14e. By doing this, it is possible to enhance the adhesive property of the sealing material 30 with the opening-portion covering plate 14. In addition, the resin having been supplied to the second filled space Mc2 enters into the inside groove 14e, and then reaches to a contact surface Ma of the inner side surface 14c of the opening-portion covering plate 14 with the metal mold M. By doing this, it is possible to inhibit drastic supply of a large amount of resin onto the contact surface Ma, and thus it is possible to suppress a resin leakage to the outside of the metal mold M.

### (c) Third surface M3

The third surface M3 is the cavity surface Mcs that is opposed with a distance to the side surface 24c of the plate part 24. At the accommodating step S30, the resin flow channel Mc3 is formed between the side surface 24c of the plate part 24 and the third surface M3 of the metal mold M. Into this resin flow channel Mc3, the resin flows through the first filled space Mc1. The resin having filled this resin flow channel Mc3 becomes the side surface protecting part 36 that is configured to cover the side surface 24c of the plate part 24 (see FIG. 2). In addition, the tip end Mc3a of the resin flow channel Mc3 is configured to communicate with the gap S between the peripheral edge part 24a1 of the connection surface 24a and the first surface M1. Incidentally, in the present embodiment, the cavity surface Mcs (in other words, the third surface M3) configured to form the resin flow channel Mc3 is configured to continue along the circumferential direction of the side surface 24c of the plate part 24. As this result, in the electric storage device 100 after the manufacture, the side surface protecting part 36 configured to continuously cover the side surface 24c of the plate part 24 is formed.

### (d) Fourth surface M4

Next, the fourth surface M4 is the cavity surface Mcs that is opposed with a distance to the outer side surface 14b of the opening-portion covering plate 14. The space where the fourth surface M4 of this metal mold M and the outer side surface 14b of the opening-portion covering plate 14 are opposed is referred to as "fourth filled space Mc4" The resin having filled this fourth filled space Mc4 becomes the outside insulating part 38 of the sealing material 30 (see FIG. 2). Incidentally, the fourth surface M4 of the metal mold M is configured to extend to an outer side more than the outside groove 14d of the outer side surface 14b of the opening-portion covering plate 14. As this result, the inside insulating part 34 configured to cover the outside groove 14d is formed. By doing this, it is possible to enhance the adhesive property of the sealing material 30 with the opening-portion covering plate 14. In addition, similarly to the above described inside groove 14e, the outside groove 14d has a function of suppressing the resin leakage caused from a contact surface Mb of the outer side surface 14b of the opening-portion covering plate 14 with the metal mold M.

### (4) Injecting step S40

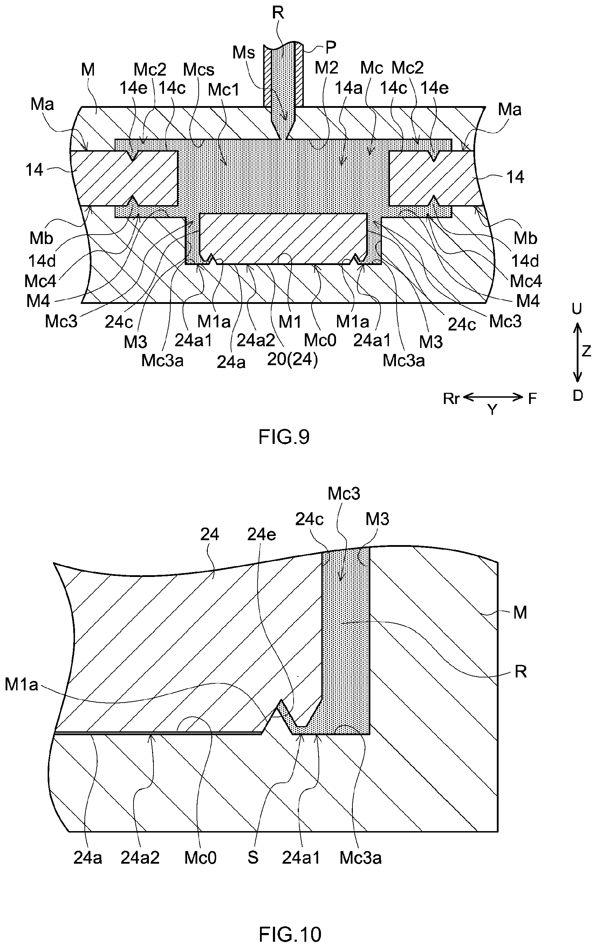

FIG. 9 is a cross section view that schematically shows the injecting step of the manufacturing method in accordance with the first embodiment. As shown in FIG. 9, at the present step, the resin R is injected into the inside cavity Mc of the metal mold M. By doing this, it is possible to integrally form the case part (the opening-portion covering plate 14) and the sealing material 30 configured to seal the penetration hole 14a (see FIG. 2). In addition, the sealing material 30 is integrated with the electrode terminal 20 (in particular, the plate part 24 and the top end part 22a of the shaft part 22) having been inserted into the penetration hole 14a. Incidentally, as the resin R filling at the present step, it is possible to use a thermoplastic resin, such as polyethylene, polyamide, polypropylene, and vinyl chloride resin. By injecting these thermoplastic resins into the inside cavity Mc and then cooling the resultant, it is possible to easily form the sealing material 30.

Below, the injection of the resin R at the present step will be described. The metal mold M in the present embodiment includes an injection hole Ms that is configured to penetrate the metal mold M. This injection hole Ms is formed on the second surface M2 to be opposed to the back surface 24b of the plate part 24. In addition, the injection hole Ms is connected to a resin supply source (omitted in drawings) through a transfer pipe P. The resin R having been supplied from the resin supply source is injected into the inside cavity Mc of the metal mold M through the transfer pipe P and the injection hole Ms. Then, the resin R having been injected is firstly applied to fill the first filled space Mc1 that is a space having the largest volume. Then, the resin R is supplied, through this first filled space Mc1, to the second filled space Mc2, the resin flow channel Mc3, the fourth filled space Mc4, and the like. By doing this, it is possible to inhibit a large amount of resin R from being drastically supplied into a space that is comparatively narrow, and thus it is possible to suppress the resin leakage and a mold failure. Particularly, by supplying the resin R through the first filled space Mc1 into the resin flow channel Mc3, a supply speed of the resin R directed toward the tip end Mc3a of the resin flow channel Mc3 is reduced. By doing this, it is possible to further suitably suppress the resin R from invading into the resin blocking part Mc0.

Here, in the present embodiment, the resin flow channel Mc3 is formed between the side surface 24c of the plate part 24 and the third surface M3 of the metal mold M. Then, this resin flow channel Mc3 is configured to communicate with the gap S between the peripheral edge part 24a1 of the connection surface 24a and the first surface M1 of the metal mold M. Thus, the resin R supplied at the injecting step S40 is applied to fill the gap S through the resin flow channel Mc3. In particular, as shown by FIG. 10, the resin R having flowed into the resin flow channel Mc3 flows into the gap S through the tip end Mc3a of this resin flow channel Mc3. By doing this, the peripheral edge part 24a1 of the connection surface 24a is covered with the resin R. Then, by curing this resin R, the locking part 39 configured to cover the peripheral edge part 24a1 of the connection surface 24a is formed.

Additionally, as described above, regarding the manufacturing method in accordance with the present embodiment, the accommodating position of the electrode terminal 20 is adjusted to make the inclined plane of the wedge-shaped protruding part M1a have the surface contact with the inclined plane of the recessed part 24e. By doing this, it is possible to inhibit the resin R from invading to an inward more than the protruding part M1a. As this result, it is possible to inhibit the resin R from adhering to the central part 24a2 of the connection surface 24a. Incidentally, according to the manufacturing method described above, as shown in FIG. 2, a part of the recessed part 24e of the electrode terminal 20 is covered by the locking part 39.

In addition, it is preferable that a rough surface processing part Rs is formed on a surface that comes into contact with the opening-portion covering plate 14 or the resin R of the electrode terminal 20. By doing this, it is possible to enhance the adhesive property with the sealing material 30 after a curing operation. For example, as shown in FIG. 4 to FIG. 5 and FIG. 7, the rough surface processing part Rs is formed on the outer side surface 14b of the opening-portion covering plate 14 at a periphery of the penetration hole 14a, the side surface 24c of the plate part 24, the top end part 22a of the shaft part 22, or the like. In addition, as the illustration is omitted, the rough surface processing part is formed additionally on the inner side surface 14c of the opening-portion covering plate 14 at the periphery of the penetration hole 14a, the back surface 24b of the plate part 24, or the like. Incidentally, the rough surface processing part Rs can be formed by a conventionally known rough surface processing treatment (sandblasting, chemical process, or the like). Incidentally, it is particularly preferable to make the rough surface processing part Rs be formed at the peripheral edge part 24a1 of the connection surface 24a (typically, the notch part 24f). By doing this, it is possible to further enhance the connection strength of the locking part 39 with the electrode terminal 20.

### [Another embodiment]

Above, one embodiment of the herein disclosed technique has been explained. However, the herein disclosed technique is not restricted to the above described embodiment. Below, another embodiment of the herein disclosed technique will be described.

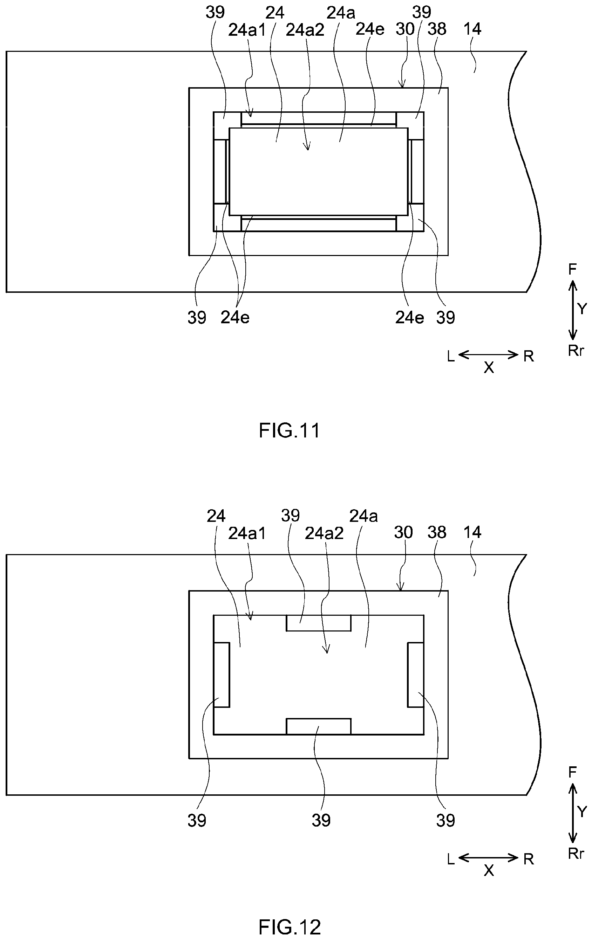

As shown in FIG. 3, the locking part 39 of the first embodiment includes the peripheral edge part 24a1 of the connection surface 24a that is continuously covered over the whole circumference. However, it is good if the locking part 39 is configured to cover at least a part of the peripheral edge part 24a1 of the connection surface 24a, and thus it is not restricted to the shape shown in FIG. 3. For example, the locking part 39 shown by FIG. 11 is configured to cover only four corners of the connection surface 24a of the plate part 24 whose flat surface is rectangular. In addition, the locking part 39 shown by FIG. 12 is configured to cover the peripheral edge part 24a1 from which the four corners of the connection surface 24a are excluded. Any of the locking parts 39 shown by FIG. 11 and FIG. 12 can regulate the rise of the electrode terminal 20 and can suppress the breakage of the sealing material 30 and the detachment of the electrode terminal 20.

Additionally, in configurations shown by FIG. 3 and FIG. 11, the recessed part 24e is formed between the central part 24a2 of the connection surface 24a and the peripheral edge part 24a1. However, in the herein disclosed technique, the recessed part might be not formed on the connection surface of the electrode terminal. For example, in the electric storage device 100 shown by FIG. 12, the recessed part is not formed on the connection surface 24a of the electrode terminal 20. However, even in the configuration shown by this FIG. 12, the locking part 39 is formed at the peripheral edge part 24a1 of the connection surface 24a, and thus it is possible to regulate the rise of the electrode terminal 20. Incidentally, in the configuration shown by FIG. 12, the recessed part is not formed, and thus there is a possibility that the resin adheres to the central part 24a2 of the connection surface 24a after the sealing material 30 is molded. However, if a process for removing the resin having adhered to the central part 24a2 of the connection surface 24a (a polishing process, an etching process, or the like) is performed, it is possible to obtain the electrode terminal 20 capable of being connected to the outside electrically conductive part. Anyway, from a perspective of enhancing the production efficiency while decreasing the number of steps during the manufacture, as shown in FIG. 3 and FIG. 11, it is preferable to form the recessed part 24e on the connection surface 24a of the electrode terminal 20 so as to suppress the resin from adhering to the central part 24a2 of the connection surface 24a.

In addition, as shown by FIG. 2, regarding the first embodiment, the notch part 24f is formed at the peripheral edge part 24a1 of the connection surface 24a, and the locking part 39 is formed at the downward D more than the central part 24a2 of the connection surface 24a. However, the configuration described above neither be an element restricting the herein disclosed technique. For example, even if the locking part is formed at the upward more than the central part of the connection surface, it is possible to connect to the outside electrically conductive part when the central part of the connection surface is exposed to the outside. For example, if a projection configured to protrude downward is formed on an outside electrically conductive part (a bus bar, or the like), it is possible to connect the outside electrically conductive part to the central part of the connection surface even when the locking part is arranged at the upward more than the central part of the connection surface.

Above, the herein disclosed technique has been explained in detail. However, these are merely illustrations, and are not to restrict the scope of claims. The technique recited in claims contains matters in which the above-illustrated specific example is variously deformed or changed. In other words, the herein disclosed technique semantically covers forms recited in item 1 to item 6 described below.

### [Item 1]

An electric storage device, comprising:
an electrode body; and
a case configured to accommodate the electrode body, wherein
the case comprises:
   a case part that comprises a penetration hole;
   an electrode terminal that is inserted into the penetration hole; and
   a sealing material that is configured to seal the penetration hole and that is a resin member integrated with the case part and the electrode terminal,
the electrode terminal comprises:
   a shaft part that is inserted into the penetration hole; and
   a plate part that is arranged along the case part,
the plate part comprises:
   a connection surface that is exposed to an outside of the case;
   a back surface at a side opposite to the connection surface; and
   a side surface that is configured to continue to the connection surface and the back surface, and
the sealing material comprises:
   a base part that is configured to cover the back surface of the plate part and the case part;
   a side surface protecting part that is configured to continue to the base part and that is configured to cover the side surface of the plate part; and
   a locking part that is configured to continue to a top end of the side surface protecting part and is configured to cover at least a part of a peripheral edge part of the connection surface.

### [Item 2]

The electric storage device recited in item 1, wherein
the locking part is configured to continuously cover the peripheral edge part of the connection surface over a whole circumference.

### [Item 3]

The electric storage device recited in item 1, wherein
the plate part is a plate-shaped portion whose flat surface shape is rectangular, and
the locking part is configured to cover upper surfaces of four corners of the connection surface of the plate part whose flat surface is rectangular.

### [Item 4]

The electric storage device recited in any one of items 1 to 3, wherein
a recessed part configured to be depressed from the connection surface is formed between a central part of the connection surface and the peripheral edge part.

### [Item 5]

The electric storage device recited in any one of items 1 to 4, wherein a height position of the locking part is equal to or lower than a height position of a central part of the connection surface.

### [Item 6]

A manufacturing method of an electric storage device, comprising:
preparing a case part that comprises a penetration hole;
inserting an electrode terminal into the penetration hole;
arranging the case part and the electrode terminal in an inside cavity of a metal mold; and
injecting a resin into the inside cavity of the metal mold and for integrally forming the case part with a sealing material configured to seal the penetration hole, wherein
the electrode terminal comprises:
   a shaft part that is inserted into the penetration hole; and
   a plate part that is arranged along the case part when the shaft part has been inserted into the penetration hole,
the plate part comprises:
   a connection surface that is exposed to an outside of the case part;
   a back surface that is positioned at a side opposite to the connection surface; and
   a side surface that is configured to continue to the connection surface and the back surface,
the metal mold comprises:
   a first surface that is a cavity surface having a surface contact with a central part of the connection surface of the plate part; and
   a third surface that is a cavity surface opposed with a distance to the side surface of the plate part,
at the arranging, a resin flow channel is formed between the side surface of the plate part and the third surface of the metal mold, and a gap configured to communicate with the resin flow channel is formed between at least a part of a peripheral edge part of the connection surface of the plate part and the first surface of the metal mold, and
at the integrally forming, a resin is applied to fill the gap through the resin flow channel.

## Claims

1. An electric storage device, comprising:
an electrode body (40); and
a case (10) configured to accommodate the electrode body, wherein
the case (10) comprises:
a case part (14) that comprises a penetration hole (14a);
an electrode terminal (20) that is inserted into the penetration hole (14a); and
a sealing material (30) that is configured to seal the penetration hole (14a) and that is a resin member integrated with the case part (14) and the electrode terminal (20),
the electrode terminal (20) comprises:
a shaft part (22) that is inserted into the penetration hole (14a); and
a plate part (24) that is arranged along the case part (14),
the plate part (24) comprises:
a connection surface (24a) that is exposed to an outside of the case (10);
a back surface (24b) at a side opposite to the connection surface (24a); and
a side surface (24c) that is configured to continue to the connection surface (24a) and the back surface (24b), and
the sealing material (30) comprises:
a base part (32) that is configured to cover the back surface (24b) of the plate part (24) and the case part (14);
a side surface protecting part (36) that is configured to continue to the base part (32) and that is configured to cover the side surface (24c) of the plate part (24); and
a locking part (39) that is configured to continue to a top end of the side surface protecting part (36) and is configured to cover at least a part of a peripheral edge part of the connection surface (24a).

2. The electric storage device according to claim 1, wherein
the locking part (39) is configured to continuously cover the peripheral edge part of the connection surface (24a) over a whole circumference.

3. The electric storage device according to claim 1, wherein
the plate part (24) is a plate-shaped portion whose flat surface shape is rectangular, and
the locking part (39) is configured to cover upper surfaces of four corners of the connection surface (24a) of the plate part (24) whose flat surface is rectangular.

4. The electric storage device according to any one of claims 1 to 3, wherein
a recessed part configured to be depressed from the connection surface (24a) is formed between a central part of the connection surface (24a) and the peripheral edge part.

5. The electric storage device according to any one of claims 1 to 4, wherein a height position of the locking part (39) is equal to or lower than a height position of a central part of the connection surface (24a).

6. A manufacturing method of an electric storage device, comprising:
preparing a case part (14) that comprises a penetration hole (14a);
inserting an electrode terminal (20) into the penetration hole (14a);
arranging the case part (14) and the electrode terminal (20) in an inside cavity of a metal mold (M); and
injecting a resin into the inside cavity of the metal mold (M) and for integrally forming the case part (14) with a sealing material (30) configured to seal the penetration hole (14a), wherein
the electrode terminal (20) comprises:
a shaft part (22) that is inserted into the penetration hole (14a); and
a plate part (24) that is arranged along the case part (14) when the shaft part has been inserted into the penetration hole (14a),
the plate part (24) comprises:
a connection surface (24a) that is exposed to an outside of the case part (14);
a back surface (24b) that is positioned at a side opposite to the connection surface (24a); and
a side surface (24c) that is configured to continue to the connection surface (24a) and the back surface (24b),
the metal mold (M) comprises:
a first surface (M1) that is a cavity surface (Mcs) having a surface contact with a central part of the connection surface (24a) of the plate part (24); and
a third surface (M3) that is a cavity surface (Mcs) opposed with a distance to the side surface (24c) of the plate part (24),
at the arranging, a resin flow channel (Mc3) is formed between the side surface (24c) of the plate part (24) and the third surface (M3) of the metal mold (M), and a gap configured to communicate with the resin flow channel (Mc3) is formed between at least a part of a peripheral edge part of the connection surface (24a) of the plate part (24) and the first surface (M1) of the metal mold (M), and
at the integrally forming, a resin is applied to fill the gap through the resin flow channel (Mc3).
